# EUROPÄISCHE PATENTANMELDUNG

(11) **EP 4 199 553 A1**
(43) Veröffentlichungstag der Anmeldung: **21.06.2023**
(21) Anmeldenummer: 21214247.5
(22) Anmeldetag: 14.12.2021
(51) Int. Cl.: H04W 4/40

(54) **VERFAHREN UND TESTEINHEIT ZUR TESTAUSFÜHRUNG VIRTUELLER TESTS**

(71) Anmelder: dSPACE GmbH, 33102 Paderborn (DE)
(72) Erfinder: Stichling, Dr. Dirk, 33102 Paderborn (DE)

(57) **Zusammenfassung**

Die Erfindung betrifft ein computerimplementiertes Verfahren und eine Testeinheit (1) zum Minimieren eines Rechenaufwands für eine Testausführung einer Mehrzahl virtueller Tests (T1-Tn) einer Vorrichtung zur zumindest teilweisen autonomen Führung eines Kraftfahrzeugs, umfassend ein Ausführen (S3) des ersten virtuellen Tests (T1) und des zweiten virtuellen Tests (T2) unter Berücksichtigung des identischen Anteils (An1) und/oder des Differenzanteils (An2) des zweiten virtuellen Tests (T2) zum ersten virtuellen Test (T1) von Fahrsituationsparametern (FP) und/oder des Zeitpunktes (Z1) der Variation zumindest eines Parameters derart, dass der Rechenaufwand für die Testausführung minimiert wird.

## Beschreibung

Die vorliegende Erfindung betrifft ein computerimplementiertes Verfahren zum Minimieren eines Rechenaufwands für eine Testausführung einer Mehrzahl virtueller Tests einer Vorrichtung zur zumindest teilweisen autonomen Führung eines Kraftfahrzeugs.

Die vorliegende Erfindung betrifft des Weiteren eine Testeinheit zum Minimieren eines Rechenaufwands für eine Testausführung einer Mehrzahl virtueller Tests einer Vorrichtung zur zumindest teilweisen autonomen Führung eines Kraftfahrzeugs.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Simulationen verwendet werden.

Zur Erstellung von Testszenarien für Simulationen ist die Durchführung von Testfahrten erforderlich. Die hierdurch gewonnenen Sensordaten werden sodann in ein logisches Szenario abstrahiert. Eingangsdaten sind dabei Rohdaten, also Sensordaten aus realen Messfahrten im Sinne von Aufzeichnungen von Radarechos, 3D-Punktewolken aus Lidarmessungen und Bilddaten oder virtuell erzeugte Sensordaten von Radar-, LiDAR-, Ultraschall- und/oder Kamerasensoren.

Eine weitere Möglichkeit zur Erstellung von Testszenarien liegt im manuell und / oder (teil)automatischen Aufbau solcher Testszenarien mit entsprechenden Testwerkzeugen.

Ergebnisdaten sind simulierbare Fahrszenarien, die einerseits eine Umgebung und andererseits auch Trajektorien umfassen.

Die Methode des Szenario-basierten Testens verfolgt dabei den Ansatz, dass ein Anwender Szenarien mit einer vorgegebenen Anzahl an Parametern erstellt. Die Parameter selbst sollen dann zum Zwecke der Simulation variiert werden. Aufgrund einer Anzahl an Parameterwertekombination ergibt sich daraus eine sehr große Anzahl an durchzuführenden Simulationen.

JP 2000076211 A offenbart eine Vorrichtung und ein Verfahren zur Ausführung von Simulationen, wobei eine Simulationsanforderung auf Grundlage einer Benutzereingabe erzeugt wird. Ein Simulationsaufgabengenerator erzeugt ferner eine Simulationsaufgabe auf Grundlage eines durch die Simulationsanforderung festgelegten Parameterbereichs. Unter den zugänglichen Prozessoren wird entschieden, welche Prozessoren für die Ausführung der parallelen Simulation zur Verfügung stehen.

Die Simulationsaufgabe wird den Prozessoren auf der Grundlage der Leistung und der Ressourcen der jeweils verfügbaren Prozessoren zugewiesen. Nach der Verteilung der Simulationsaufgabe wird der Simulationsfortschritt überwacht und die von den verschiedenen Prozessoren erzielten Simulationsergebnisse werden zusammengestellt.

Der benötigte Ressourcenbedarf (insbesondere CPU- und GPU-Ressourcen) für solche Simulationen ist jedoch sehr hoch. Hierbei spielt es keine Rolle, ob Simulationen sequentiell oder parallel durchgeführt werden.

Demzufolge besteht ein Bedarf, bestehende Verfahren zur Testausführung einer Mehrzahl virtueller Tests einer Vorrichtung zur zumindest teilweisen autonomen Führung eines Kraftfahrzeugs dahingehend zu verbessern, dass die Testausführung der Mehrzahl virtueller Tests unter Verwendung geringerer Rechenressourcen ermöglicht wird.

Es ist daher Aufgabe der Erfindung, ein effizienteres Verfahren zur Testausführung der Mehrzahl virtueller Tests der Vorrichtung zur zumindest teilweisen autonomen Führung eines Kraftfahrzeugs bereitzustellen.

### Offenbarung der Erfindung

Die Aufgabe wird erfindungsgemäß durch ein computerimplementiertes Verfahren zum Minimieren eines Rechenaufwands für eine Testausführung einer Mehrzahl virtueller Tests einer Vorrichtung zur zumindest teilweisen autonomen Führung eines Kraftfahrzeugs mit den Merkmalen des Patentanspruchs 1 gelöst.

Des Weiteren wird die Aufgabe erfindungsgemäß durch eine Testeinheit zum Minimieren eines Rechenaufwands für eine Testausführung einer Mehrzahl virtueller Tests einer Vorrichtung zur zumindest teilweisen autonomen Führung eines Kraftfahrzeugs mit den Merkmalen des Patentanspruchs 14 gelöst.

Darüber hinaus wird die Aufgabe durch ein Computerprogramm mit Programmcode, um das erfindungsgemäße Verfahren durchzuführen, wenn das Computerprogramm auf einem Computer ausgeführt wird, mit den Merkmalen des Patentanspruchs 15 gelöst.

Die Erfindung betrifft ein computerimplementiertes Verfahren zum Minimieren eines Rechenaufwands für eine Testausführung einer Mehrzahl virtueller Tests einer Vorrichtung zur zumindest teilweisen autonomen Führung eines Kraftfahrzeugs.

Das Verfahren umfasst ein Bereitstellen eines Parametersatzes eines ersten virtuellen Tests und eines zweiten virtuellen Tests von Fahrsituationsparametern und von Konfigurationsdaten eines den ersten virtuellen Test und den zweiten virtuellen Test durchführenden Algorithmus.

Der Parametersatz kann Rohdaten, also Sensordaten aus realen Messfahrten im Sinne von Aufzeichnungen von Radarechos, 3D-Punktewolken aus Lidarmessungen und Bilddaten oder virtuell erzeugte Sensordaten von Radar-, LiDAR-, Ultraschall- und/oder Kamerasensoren umfassen.

Alternativ kann der Parametersatz von Fahrsituationsparametern beispielsweise künstlich bzw. synthetisch sowie manuell und / oder (teil)automatisch mit entsprechenden Testwerkzeugen einer Testumgebung erzeugte Sensordaten aufweisen.

Des Weiteren umfasst das Verfahren ein Bestimmen eines identischen Anteils und/oder eines Differenzanteils des zweiten virtuellen Tests zum ersten virtuellen Test von Fahrsituationsparametern und/oder eines Zeitpunktes einer Variation zumindest eines Parameters des zweiten virtuellen Tests gegenüber dem ersten virtuellen Test unter Verwendung des Parametersatzes des ersten virtuellen Tests und des zweiten virtuellen Tests und der Konfigurationsdaten des den ersten virtuellen Test und den zweiten virtuellen Test durchführenden Algorithmus.

Das Verfahren umfasst darüber hinaus ein Ausführen des ersten virtuellen Tests und des zweiten virtuellen Tests unter Berücksichtigung des identischen Anteils und/oder des Differenzanteils des zweiten virtuellen Tests zum ersten virtuellen Test von Fahrsituationsparametern und/oder des Zeitpunktes einer Variation zumindest eines Parameters derart, dass der Rechenaufwand für die Testausführung minimiert wird.

Die Erfindung betrifft ferner eine Testeinheit zum Minimieren eines Rechenaufwands für eine Testausführung einer Mehrzahl virtueller Tests einer Vorrichtung zur zumindest teilweisen autonomen Führung eines Kraftfahrzeugs.

Die Testeinheit weist Mittel zum Bereitstellen eines Parametersatzes eines ersten virtuellen Tests und eines zweiten virtuellen Tests von Fahrsituationsparametern und von Konfigurationsdaten eines den ersten virtuellen Test und den zweiten virtuellen Test durchführenden Algorithmus auf.

Des Weiteren weist die Testeinheit Mittel zum Bestimmen eines identischen Anteils und/oder eines Differenzanteils des zweiten virtuellen Tests zum ersten virtuellen Test von Fahrsituationsparametern und/oder eines Zeitpunktes einer Variation zumindest eines Parameters des zweiten virtuellen Tests gegenüber dem ersten virtuellen Test unter Verwendung des Parametersatzes des ersten virtuellen Tests und des zweiten virtuellen Tests und der Konfigurationsdaten des den ersten virtuellen Test und den zweiten virtuellen Test durchführenden Algorithmus, auf.

Die Testeinheit weist darüber hinaus Mittel zum Ausführen des ersten virtuellen Tests und des zweiten virtuellen Tests unter Berücksichtigung des identischen Anteils und/oder des Differenzanteils des zweiten virtuellen Tests zum ersten virtuellen Test von Fahrsituationsparametern und/oder des Zeitpunktes einer Variation zumindest eines Parameters derart, dass der Rechenaufwand für die Testausführung minimiert wird, auf.

Eine Idee der Erfindung ist es, einen Ressourcenverbrauch bei der Durchführung virtueller Tests des Szenario-basierten Testens dadurch zu reduzieren, dass Simulationen, die bis zu einem bestimmten Zeitpunkt identisch verlaufen, nur einmal durchgeführt werden. Beim Szenario-basierten Testen wird ein Szenario mit unterschiedlicher Parametrierung i.d.R. parallel simuliert.

Daher ist es wahrscheinlich, dass jeweils eine Teilmenge der Simulationen bis zu einem bestimmten Zeitpunkt identisch verläuft.

Wenn demnach bekannt ist, dass ein konkreter Parameter erst ab einem bestimmten Simulationszeitpunkt Einfluss auf die Simulation hat, dann ist es ausreichend, zunächst eine einzelne Simulation bis zu diesem Zeitpunkt auszuführen. Ab diesem Zeitpunkt wird die Simulation sodann entsprechend der Anzahl der Parametervariationen aufgeteilt.

Wenn zu einem späteren Zeitpunkt in der Simulation ein anderer Parameter relevant wird, dann werden die Simulationen entsprechend an dieser Stelle wieder aufgeteilt.

Sollten die Simulationszeitpunkte, an denen die Parameter Einfluss auf die Simulation haben, bereits vor der Simulation bekannt sein, so kann vorab ein Plan erstellt werden, wann die Simulationen in weitere Unter-Simulationen aufgeteilt werden. Somit kann beispielsweise vorab eine Schätzung des Ressourcenaufwands erstellt werden.

Sollten sich die Simulationszeitpunkte, an denen die Parameter Einfluss auf die Simulation haben, erst während der Laufzeit der Simulation ergeben, dann kann die Simulation auch dynamisch zu dem entsprechenden Zeitpunkt aufgeteilt werden.

Hierzu kann während der Simulation ein jeweiliger Simulationszeitpunkt berechnet werden, an welchem ein oder mehrere Parameter Einfluss auf die Simulation haben und zu diesem Simulationszeitpunkt somit die aktuelle Simulation bzw. ein aktueller Simulationspfad in weitere Unter-Simulationen aufgeteilt werden.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass zum Minimieren des Rechenaufwands für die Testausführung der erste virtuelle Test und der Differenzanteil des zweiten virtuellen Tests zum ersten virtuellen Test von Fahrsituationsparametern ausgeführt wird. Somit kann in vorteilhafter Weise der Rechenaufwand zur Testausführung reduziert werden.

Gemäß einer weiteren bevorzugten Weiterbildung der Erfindung ist vorgesehen, dass der Differenzanteil des zweiten virtuellen Tests zum ersten virtuellen Test von Fahrsituationsparametern ab dem Zeitpunkt der Variation des zumindest einen Parameters ausgeführt wird. Somit läuft der Differenzanteil des zweiten virtuellen Tests unmittelbar im Anschluss an den gemeinsamen Anteil zum ersten Test ab.

Gemäß einer weiteren bevorzugten Weiterbildung der Erfindung ist vorgesehen, dass sich der Differenzanteil des zweiten virtuellen Tests zum ersten virtuellen Test von Fahrsituationsparametern zeitlich an den identischen Anteil des zweiten virtuellen Tests zum ersten virtuellen Test von Fahrsituationsparametern anschließt.

Somit kann eine effiziente sowie partiell parallele Testausführung von Differenzanteilen zu identischen Anteilen virtueller Tests ermöglicht werden.

Gemäß einer weiteren bevorzugten Weiterbildung der Erfindung ist vorgesehen, dass der erste virtuelle Test und der Differenzanteil des zweiten virtuellen Tests zum ersten virtuellen Test von Fahrsituationsparametern sequentiell ausgeführt werden.

Dadurch kann in vorteilhafter Weise vermieden werden, dass bestimmte Simulationsanteile mehrfach berechnet bzw. simuliert werden.

Unter dem Begriff sequentiell ist in diesem Kontext zu verstehen, dass der erste virtuelle Test und der Differenzanteil des zweiten virtuellen Tests zum ersten virtuellen Test von Fahrsituationsparametern unmittelbar aufeinander folgend oder mit einem Zeitversatz aufeinander folgend, welcher durch ein Berechnen des Differenzanteils des zweiten virtuellen Tests bedingt ist, ausgeführt werden.

Gemäß einer weiteren bevorzugten Weiterbildung der Erfindung ist vorgesehen, dass der Parametersatz des ersten virtuellen Tests von Fahrsituationsparametern und die Konfigurationsdaten des den ersten virtuellen Test ausführenden Algorithmus zum Erzeugen des Parametersatzes des zweiten virtuellen Tests von Fahrsituationsparametern zum Zeitpunkt der Variation des zumindest eines Parameters dupliziert und durch den zumindest einen Parameter variiert wird.

Somit kann der zweite virtuelle Test aufbauend auf dem ersten virtuellen Test mit jeweils vorgegebenen bzw. spezifisch geänderten Parametern durchgeführt werden.

Gemäß einer weiteren bevorzugten Weiterbildung der Erfindung ist vorgesehen, dass der erste virtuelle Test auf einem ersten Rechenknoten ausgeführt wird, wobei nach dem Duplizieren des Parametersatzes des ersten virtuellen Tests von Fahrsituationsparametern und der Konfigurationsdaten des den ersten virtuellen Test ausführenden Algorithmus zum Erzeugen des Parametersatzes des zweiten virtuellen Tests von Fahrsituationsparametern der zweite virtuelle Test auf dem ersten Rechenknoten oder einem zweiten Rechenknoten ausgeführt wird.

Bei Verwendung von zwei oder mehr Rechenknoten kann somit in vorteilhafter Weise eine CPU- und/oder GPU-Auslastung auf mehrere Rechenknoten verteilt werden.

Gemäß einer weiteren bevorzugten Weiterbildung der Erfindung ist vorgesehen, dass die Konfigurationsdaten des den ersten virtuellen Test und den zweiten virtuellen Test durchführenden Algorithmus zu testende Wertebereiche von Fahrsituationsparametern, eine, insbesondere vorgegebene oder durch den Algorithmus parametrierbare, Schrittweite der zu testenden Fahrsituationsparameter und/oder eine Anzahl von Simulationen pro Iteration umfassen.

Dadurch können beispielsweise eine mögliche Anzahl von Parametervariationen eines virtuellen Tests sowie ein Rechenaufwand einer jeweiligen Iteration bestimmt werden.

Gemäß einer weiteren bevorzugten Weiterbildung der Erfindung ist vorgesehen, dass der Parametersatz des zweiten virtuellen Tests von Fahrsituationsparametern vor oder während der Ausführung des ersten virtuellen Tests bereitgestellt wird.

Der Parametersatz des zweiten virtuellen Tests kann somit in vorteilhafter Weise während der Durchführung des ersten virtuellen Tests berechnet werden, was eine zeiteffiziente Durchführung des Gesamttests ermöglicht.

Gemäß einer weiteren bevorzugten Weiterbildung der Erfindung ist vorgesehen, dass der identische Anteil und/oder der Differenzanteil des zweiten virtuellen Tests zum ersten virtuellen Test von Fahrsituationsparametern und/oder der Zeitpunkt der Variation des zumindest einen Parameters des zweiten virtuellen Tests gegenüber dem ersten virtuellen Test vor oder während der Durchführung des ersten virtuellen Tests bestimmt wird.

Somit kann eine effiziente Durchführung des ersten und zweiten virtuellen Tests ohne die Notwendigkeit eines Zwischenspeicherns bzw. Pausierens des zweiten virtuellen Tests vor dessen Ausführung ermöglicht werden.

Gemäß einer weiteren bevorzugten Weiterbildung der Erfindung ist vorgesehen, dass ein Parametersatz eines dritten virtuellen Tests von Fahrsituationsparametern und von Konfigurationsdaten eines den dritten virtuellen Test durchführenden Algorithmus bereitgestellt wird, und wobei ein identischer Anteil und/oder ein Differenzanteil des dritten virtuellen Tests zum zweiten virtuellen Test von Fahrsituationsparametern und/oder eines Zeitpunktes einer Variation zumindest eines Parameters des dritten virtuellen Tests gegenüber dem zweiten virtuellen Test bestimmt wird.

Somit kann durch Ausführung lediglich des Differenzanteils des dritten virtuellen Tests ein Ressourcenverbrauch bei der Durchführung des Szenario-basierten Testens reduziert werden.

Gemäß einer weiteren bevorzugten Weiterbildung der Erfindung ist vorgesehen, dass der erste virtuelle Test und jeder weitere virtuelle Test in einer Cloud-Umgebung ausgeführt wird. Dies ermöglicht in vorteilhafter Weise eine flexible Zuweisung von Rechenresourcen entsprechend jeweiliger Anforderungen des virtuellen Tests.

Gemäß einer weiteren bevorzugten Weiterbildung der Erfindung ist vorgesehen, dass das Bestimmen des identischen Anteils und/oder des Differenzanteils des zweiten virtuellen Tests zum ersten virtuellen Test von Fahrsituationsparametern und/oder des Zeitpunktes der Variation des zumindest einen Parameters des zweiten virtuellen Tests gegenüber dem ersten virtuellen Test durch Analyse des den Parametersatz simulierenden Algorithmus oder durch vorbestimmtes Festlegen des Zeitpunktes der Variation des zumindest einen Parameters des zweiten virtuellen Tests gegenüber dem ersten virtuellen Test durchgeführt wird.

Somit kann in vorteilhafter Weise ein zeitlicher Ablauf des ersten und/oder zweiten virtuellen Tests sowie eine Parametervariation des zweiten virtuellen Tests gegenüber dem ersten virtuellen Test berechnet oder festgelegt werden.

Die hierin beschriebenen Merkmale des computerimplementierten Verfahrens zum Minimieren eines Rechenaufwands für eine Testausführung einer Mehrzahl virtueller Tests einer Vorrichtung zur zumindest teilweisen autonomen Führung eines Kraftfahrzeugs sind ebenso auf die Testeinheit zum Minimieren eines Rechenaufwands für eine Testausführung einer Mehrzahl virtueller Tests einer Vorrichtung zur zumindest teilweisen autonomen Führung eines Kraftfahrzeugs und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zum Minimieren eines Rechenaufwands für eine Testausführung einer Mehrzahl virtueller Tests einer Vorrichtung zur zumindest teilweisen autonomen Führung eines Kraftfahrzeugs gemäß einer bevorzugten Ausführungsform der Erfindung; und
- Fig. 2: eine schematische Darstellung einer Testeinheit zum Minimieren eines Rechenaufwands für eine Testausführung einer Mehrzahl virtueller Tests einer Vorrichtung zur zumindest teilweisen autonomen Führung eines Kraftfahrzeugs gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

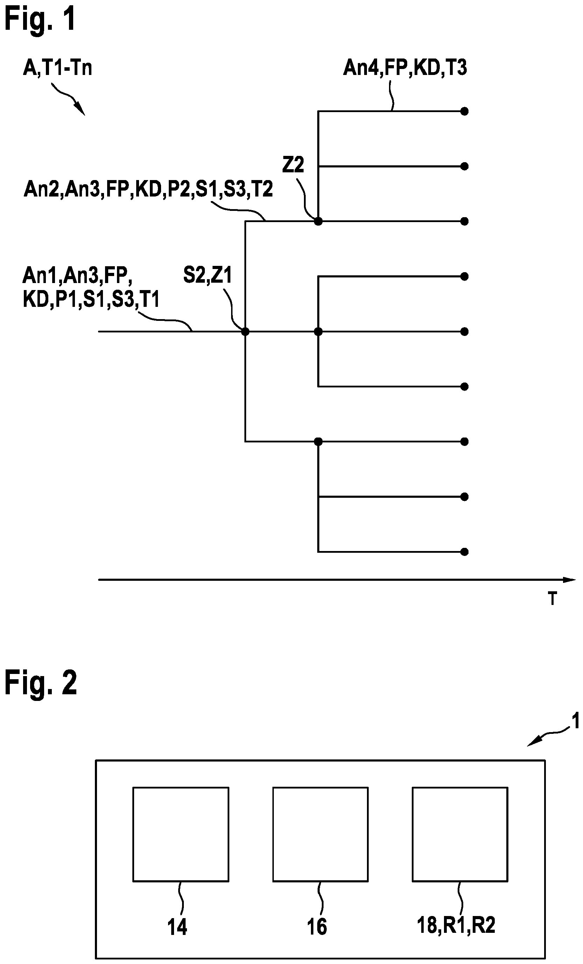

Das in Fig. 1 gezeigte Verfahren umfasst ein Bereitstellen S1 eines Parametersatzes P1, P2 eines ersten virtuellen Tests T1 und eines zweiten virtuellen Tests T2 von Fahrsituationsparametern FP und von Konfigurationsdaten KD eines den ersten virtuellen Test T1 und den zweiten virtuellen Test T2 durchführenden Algorithmus A.

Des Weiteren umfasst das Verfahren ein Bestimmen S2 eines identischen Anteils An1 und/oder eines Differenzanteils An2 des zweiten virtuellen Tests T2 zum ersten virtuellen Test T1 von Fahrsituationsparametern FP und/oder eines Zeitpunktes Z1 einer Variation zumindest eines Parameters des zweiten virtuellen Tests T2 gegenüber dem ersten virtuellen Test T1 unter Verwendung des Parametersatzes P1, P2 des ersten virtuellen Tests T1 und des zweiten virtuellen Tests T2 und der Konfigurationsdaten KD des den ersten virtuellen Test T1 und den zweiten virtuellen Test T2 durchführenden Algorithmus A.

Darüber hinaus umfasst das Verfahren ein Ausführen S3 des ersten virtuellen Tests T1 und des zweiten virtuellen Tests T2 während einer Zeitdauer T unter Berücksichtigung des identischen Anteils An1 und/oder des Differenzanteils An2 des zweiten virtuellen Tests T2 zum ersten virtuellen Test T1 von Fahrsituationsparametern FP und/oder des Zeitpunktes Z1 der Variation zumindest eines Parameters derart, dass der Rechenaufwand für die Testausführung minimiert wird.

Zum Minimieren des Rechenaufwands für die Testausführung werden der erste virtuelle Test T1 und der Differenzanteil An2 des zweiten virtuellen Tests T2 zum ersten virtuellen Test T1 von Fahrsituationsparametern FP ausgeführt.

Der Differenzanteil An2 des zweiten virtuellen Tests T2 zum ersten virtuellen Test T1 von Fahrsituationsparametern FP wird dabei ab dem Zeitpunkt Z1 der Variation des zumindest einen Parameters ausgeführt.

Der Differenzanteil An2 des zweiten virtuellen Tests T2 zum ersten virtuellen Test T1 von Fahrsituationsparametern FP schließt sich zeitlich an den identischen Anteil An1 des zweiten virtuellen Tests T2 zum ersten virtuellen Test T1 von Fahrsituationsparametern FP an.

Der erste virtuelle Test T1 und der Differenzanteil An2 des zweiten virtuellen Tests T2 zum ersten virtuellen Test T1 von Fahrsituationsparametern FP werden insbesondere sequentiell ausgeführt.

Der Parametersatz P1 des ersten virtuellen Tests T1 von Fahrsituationsparametern FP und die Konfigurationsdaten KD des den ersten virtuellen Test T1 ausführenden Algorithmus A werden zum Erzeugen des Parametersatzes P2 des zweiten virtuellen Tests T2 von Fahrsituationsparametern FP zum Zeitpunkt Z1 der Variation des zumindest einen Parameters dupliziert und durch den zumindest einen Parameter variiert.

Der erste virtuelle Test T1 wird auf einem ersten Rechenknoten R1 ausgeführt. Nach dem Duplizieren des Parametersatzes P1 des ersten virtuellen Tests T1 von Fahrsituationsparametern FP und der Konfigurationsdaten KD des den ersten virtuellen Test T1 ausführenden Algorithmus A zum Erzeugen des Parametersatzes P2 des zweiten virtuellen Tests T2 von Fahrsituationsparametern FP wird der zweite virtuelle Test T2 auf dem ersten Rechenknoten oder einem zweiten Rechenknoten R2 ausgeführt.

Die Konfigurationsdaten KD des den ersten virtuellen Test T1 und den zweiten virtuellen Test T2 durchführenden Algorithmus A umfassen zu testende Wertebereiche von Fahrsituationsparametern FP, eine, insbesondere vorgegebene oder durch den Algorithmus A parametrierbare, Schrittweite der zu testenden Fahrsituationsparameter FP und/oder eine Anzahl von Simulationen pro Iteration.

Der Parametersatz P2 des zweiten virtuellen Tests T2 von Fahrsituationsparametern FP wird vor oder während der Ausführung des ersten virtuellen Tests T1 bereitgestellt.

Der identische Anteil An1 und/oder der Differenzanteil An2 des zweiten virtuellen Tests T2 zum ersten virtuellen Test T1 von Fahrsituationsparametern FP und/oder der Zeitpunkt Z1 der Variation des zumindest einen Parameters des zweiten virtuellen Tests T2 wird gegenüber dem ersten virtuellen Test T1 vor oder während der Durchführung des ersten virtuellen Tests T1 bestimmt.

Ein Parametersatz P3 eines dritten virtuellen Tests T3 von Fahrsituationsparametern FP und von Konfigurationsdaten KD eines den dritten virtuellen Test T3 durchführenden Algorithmus A wird bereitgestellt.

Ein identischer Anteil An3 und/oder ein Differenzanteil An4 des dritten virtuellen Tests T3 zum zweiten virtuellen Test T2 von Fahrsituationsparametern FP und/oder eines Zeitpunktes Z2 einer Variation zumindest eines Parameters des dritten virtuellen Tests T3 wird gegenüber dem zweiten virtuellen Test T2 bestimmt. Der erste virtuelle Test T1 und jeder weitere virtuelle Test werden dabei in einer Cloud-Umgebung ausgeführt.

In Fig. 1 sind beispielhaft weitere Verzweigungen im Verfahrensablauf dargestellt, welche das Ausführen weiterer virtueller Tests mit zu bestimmten Zeitpunkten geänderten Fahrsituationsparametern FP und/oder Konfigurationsdaten KD des den jeweiligen Test durchführenden Algorithmus A zeigen.

Das Bestimmen des identischen Anteils An1 und/oder des Differenzanteils An2 des zweiten virtuellen Tests T2 zum ersten virtuellen Test T1 von Fahrsituationsparametern FP und/oder des Zeitpunktes Z1 der Variation des zumindest einen Parameters des zweiten virtuellen Tests T2 wird gegenüber dem ersten virtuellen Test T1 durch Analyse des den Parametersatz P1, P2 simulierenden Algorithmus A oder durch vorbestimmtes Festlegen des Zeitpunktes Z1 der Variation des zumindest einen Parameters des zweiten virtuellen Tests T2 gegenüber dem ersten virtuellen Test T1 durchgeführt.

Fig. 2 zeigt eine schematische Darstellung einer Testeinheit zum Minimieren eines Rechenaufwands für eine Testausführung einer Mehrzahl virtueller Tests einer Vorrichtung zur zumindest teilweisen autonomen Führung eines Kraftfahrzeugs gemäß der bevorzugten Ausführungsform der Erfindung.

Die Testeinheit 1 weist Mittel 14 zum Bereitstellen S1 eines Parametersatzes P1 eines ersten virtuellen Tests T1 und eines zweiten virtuellen Tests T2 von Fahrsituationsparametern FP und von Konfigurationsdaten KD eines den ersten virtuellen Test T1 und den zweiten virtuellen Test T2 durchführenden Algorithmus A auf.

Ferner weist die Testeinheit 1 Mittel 16 zum Bestimmen S2 eines identischen Anteils An1 und/oder eines Differenzanteils An2 des zweiten virtuellen Tests T2 zum ersten virtuellen Test T1 von Fahrsituationsparametern FP und/oder eines Zeitpunktes Z1 einer Variation zumindest eines Parameters des zweiten virtuellen Tests T2 gegenüber dem ersten virtuellen Test T1 unter Verwendung des Parametersatzes P1, P2 des ersten virtuellen Tests T1 und des zweiten virtuellen Tests T2 und der Konfigurationsdaten KD des den ersten virtuellen Test T1 und den zweiten virtuellen Test T2 durchführenden Algorithmus A auf.

Darüber hinaus weist die Testeinheit 1 Mittel 18 zum Ausführen S3 des ersten virtuellen Tests T1 und des zweiten virtuellen Tests T2 unter Berücksichtigung des identischen Anteils An1 und/oder des Differenzanteils An2 des zweiten virtuellen Tests T2 zum ersten virtuellen Test T1 von Fahrsituationsparametern FP und/oder des Zeitpunktes Z1 einer Variation zumindest eines Parameters derart auf, dass der Rechenaufwand für die Testausführung minimiert wird.

### Bezugszeichenliste

- 1: Testeinheit
- 14: Mittel
- 16: Mittel
- 18: Mittel
- A: Algorithmus
- An1, An3: identischer Anteil
- An2, An4: Differenzanteil
- FP: Fahrsituationsparameter
- KD: Konfigurationsdaten
- P1, P2: Parametersatz
- R1: erster Rechenknoten
- R2: zweiter Rechenknoten
- T: Zeitdauer
- S1-S3: Verfahrensschritte
- T1-Tn: virtuelles Tests
- T1: erster virtueller Test
- T2: zweiter virtueller Test
- T3: dritter virtueller Test
- Z1, Z2: Zeitpunkt

## Patentansprüche

1. Computerimplementiertes Verfahren zum Minimieren eines Rechenaufwands für eine Testausführung einer Mehrzahl virtueller Tests (T1-Tn) einer Vorrichtung zur zumindest teilweisen autonomen Führung eines Kraftfahrzeugs, mit den Schritten:
Bereitstellen (S1) eines Parametersatzes (P1, P2) eines ersten virtuellen Tests (T1) und eines zweiten virtuellen Tests (T2) von Fahrsituationsparametern (FP) und von Konfigurationsdaten (KD) eines den ersten virtuellen Test (T1) und den zweiten virtuellen Test (T2) durchführenden Algorithmus (A); Bestimmen (S2) eines identischen Anteils (An1) und/oder eines Differenzanteils (An2) des zweiten virtuellen Tests (T2) zum ersten virtuellen Test (T1) von Fahrsituationsparametern (FP) und/oder eines Zeitpunktes (Z1) einer Variation zumindest eines Parameters des zweiten virtuellen Tests (T2) gegenüber dem ersten virtuellen Test (T1) unter Verwendung des Parametersatzes (P1, P2) des ersten virtuellen Tests (T1) und des zweiten virtuellen Tests (T2) und der Konfigurationsdaten (KD) des den ersten virtuellen Test (T1) und den zweiten virtuellen Test (T2) durchführenden Algorithmus (A); und
Ausführen (S3) des ersten virtuellen Tests (T1) und des zweiten virtuellen Tests (T2) unter Berücksichtigung des identischen Anteils (An1) und/oder des Differenzanteils (An2) des zweiten virtuellen Tests (T2) zum ersten virtuellen Test (T1) von Fahrsituationsparametern (FP) und/oder des Zeitpunktes (Z1) der Variation zumindest eines Parameters derart, dass der Rechenaufwand für die Testausführung minimiert wird.

2. Computerimplementiertes Verfahren nach Anspruch 1, wobei zum Minimieren des Rechenaufwands für die Testausführung der erste virtuelle Test (T1) und der Differenzanteil (An2) des zweiten virtuellen Tests (T2) zum ersten virtuellen Test (T1) von Fahrsituationsparametern (FP) ausgeführt wird.

3. Computerimplementiertes Verfahren nach Anspruch 2, wobei der Differenzanteil (An2) des zweiten virtuellen Tests (T2) zum ersten virtuellen Test (T1) von Fahrsituationsparametern (FP) ab dem Zeitpunkt (Z1) der Variation des zumindest einen Parameters ausgeführt wird.

4. Computerimplementiertes Verfahren nach einem der vorhergehenden Ansprüche, wobei sich der Differenzanteil (An2) des zweiten virtuellen Tests (T2) zum ersten virtuellen Test (T1) von Fahrsituationsparametern (FP) zeitlich an den identischen Anteil (An1) des zweiten virtuellen Tests (T2) zum ersten virtuellen Test (T1) von Fahrsituationsparametern (FP) anschließt.

5. Computerimplementiertes Verfahren nach einem der vorhergehenden Ansprüche, wobei der erste virtuelle Test (T1) und der Differenzanteil (An2) des zweiten virtuellen Tests (T2) zum ersten virtuellen Test (T1) von Fahrsituationsparametern (FP) sequentiell ausgeführt werden.

6. Computerimplementiertes Verfahren nach Anspruch 5, wobei der Parametersatz (P1) des ersten virtuellen Tests (T1) von Fahrsituationsparametern (FP) und die Konfigurationsdaten (KD) des den ersten virtuellen Test (T1) ausführenden Algorithmus (A) zum Erzeugen des Parametersatzes (P2) des zweiten virtuellen Tests (T2) von Fahrsituationsparametern (FP) zum Zeitpunkt (Z1) der Variation des zumindest einen Parameters dupliziert und durch den zumindest einen Parameter variiert wird.

7. Computerimplementiertes Verfahren nach Anspruch 6, wobei der erste virtuelle Test (T1) auf einem ersten Rechenknoten (R1) ausgeführt wird, wobei nach dem Duplizieren des Parametersatzes (P1) des ersten virtuellen Tests (T1) von Fahrsituationsparametern (FP) und der Konfigurationsdaten (KD) des den ersten virtuellen Test (T1) ausführenden Algorithmus (A) zum Erzeugen des Parametersatzes (P2) des zweiten virtuellen Tests (T2) von Fahrsituationsparametern (FP) der zweite virtuelle Test (T2) auf dem ersten Rechenknoten oder einem zweiten Rechenknoten (R2) ausgeführt wird.

8. Computerimplementiertes Verfahren nach einem der vorhergehenden Ansprüche, wobei die Konfigurationsdaten (KD) des den ersten virtuellen Test (T1) und den zweiten virtuellen Test (T2) durchführenden Algorithmus (A) zu testende Wertebereiche von Fahrsituationsparametern (FP), eine, insbesondere vorgegebene oder durch den Algorithmus (A) parametrierbare, Schrittweite der zu testenden Fahrsituationsparameter (FP) und/oder eine Anzahl von Simulationen pro Iteration umfassen.

9. Computerimplementiertes Verfahren nach einem der vorhergehenden Ansprüche, wobei der Parametersatz (P2) des zweiten virtuellen Tests (T2) von Fahrsituationsparametern (FP) vor oder während der Ausführung des ersten virtuellen Tests (T1) bereitgestellt wird.

10. Computerimplementiertes Verfahren nach einem der vorhergehenden Ansprüche, wobei der identische Anteil (An1) und/oder der Differenzanteil (An2) des zweiten virtuellen Tests (T2) zum ersten virtuellen Test (T1) von Fahrsituationsparametern (FP) und/oder der Zeitpunkt (Z1) der Variation des zumindest einen Parameters des zweiten virtuellen Tests (T2) gegenüber dem ersten virtuellen Test (T1) vor oder während der Durchführung des ersten virtuellen Tests (T1) bestimmt wird.

11. Computerimplementiertes Verfahren nach einem der vorhergehenden Ansprüche, wobei ein Parametersatz (P3) eines dritten virtuellen Tests (T3) von Fahrsituationsparametern (FP) und von Konfigurationsdaten (KD) eines den dritten virtuellen Test (T3) durchführenden Algorithmus (A) bereitgestellt wird, und wobei ein identischer Anteil (An3) und/oder ein Differenzanteil (An4) des dritten virtuellen Tests (T3) zum zweiten virtuellen Test (T2) von Fahrsituationsparametern (FP) und/oder eines Zeitpunktes (Z2) einer Variation zumindest eines Parameters des dritten virtuellen Tests (T3) gegenüber dem zweiten virtuellen Test (T2) bestimmt wird.

12. Computerimplementiertes Verfahren nach einem der vorhergehenden Ansprüche, wobei der erste virtuelle Test (T1) und jeder weitere virtuelle Test in einer Cloud-Umgebung ausgeführt wird.

13. Computerimplementiertes Verfahren nach einem der vorhergehenden Ansprüche, wobei das Bestimmen des identischen Anteils (An1) und/oder des Differenzanteils (An2) des zweiten virtuellen Tests (T2) zum ersten virtuellen Test (T1) von Fahrsituationsparametern (FP) und/oder des Zeitpunktes (Z1) der Variation des zumindest einen Parameters des zweiten virtuellen Tests (T2) gegenüber dem ersten virtuellen Test (T1) durch Analyse des den Parametersatz (P1, P2) simulierenden Algorithmus (A) oder durch vorbestimmtes Festlegen des Zeitpunktes (Z1) der Variation des zumindest einen Parameters des zweiten virtuellen Tests (T2) gegenüber dem ersten virtuellen Test (T1) durchgeführt wird.

14. Testeinheit (1) zum Minimieren eines Rechenaufwands für eine Testausführung einer Mehrzahl virtueller Tests (T1-Tn) einer Vorrichtung zur zumindest teilweisen autonomen Führung eines Kraftfahrzeugs, mit:
Mitteln (14) zum Bereitstellen (S1) eines Parametersatzes (P1) eines ersten virtuellen Tests (T1) und eines zweiten virtuellen Tests (T2) von Fahrsituationsparametern (FP) und von Konfigurationsdaten (KD) eines den ersten virtuellen Test (T1) und den zweiten virtuellen Test (T2) durchführenden Algorithmus (A);
Mitteln (16) zum Bestimmen (S2) eines identischen Anteils (An1) und/oder eines Differenzanteils (An2) des zweiten virtuellen Tests (T2) zum ersten virtuellen Test (T1) von Fahrsituationsparametern (FP) und/oder eines Zeitpunktes (Z1) einer Variation zumindest eines Parameters des zweiten virtuellen Tests (T2) gegenüber dem ersten virtuellen Test (T1) unter Verwendung des Parametersatzes (P1, P2) des ersten virtuellen Tests (T1) und des zweiten virtuellen Tests (T2) und der Konfigurationsdaten (KD) des den ersten virtuellen Test (T1) und den zweiten virtuellen Test (T2) durchführenden Algorithmus (A); und
Mitteln (18) zum Ausführen (S3) des ersten virtuellen Tests (T1) und des zweiten virtuellen Tests (T2) unter Berücksichtigung des identischen Anteils (An1) und/oder des Differenzanteils (An2) des zweiten virtuellen Tests (T2) zum ersten virtuellen Test (T1) von Fahrsituationsparametern (FP) und/oder des Zeitpunktes (Z1) einer Variation zumindest eines Parameters derart, dass der Rechenaufwand für die Testausführung minimiert wird.

15. Computerprogramm mit Programmcode, um das Verfahren nach einem der Ansprüche 1 bis 13 durchzuführen, wenn das Computerprogramm auf einem Computer ausgeführt wird.
